# EUROPEAN PATENT APPLICATION

(11) **EP 2 264 808 A1**
(43) Date of publication of application: **22.12.2010**
(21) Application number: 10005768.6
(22) Date of filing: 02.06.2010
(51) Int. Cl.: H01M 2/02, H01M 2/20, H01M 2/22, H01M 2/30, H01M 2/26

(54) **Sealed battery and producing method therefor**

(30) Priority: 04.06.2009 JP 2009134885
(71) Applicant: HITACHI VEHICLE ENERGY, LTD., Hitachinaka-shi Ibaraki (JP)
(72) Inventor: Nakai, Kenji, Hitachinaka-shi Ibaraki (JP); Tada, Akinori, Hitachinaka-shi Ibaraki (JP); Aota, Kinya, Hitachinaka-shi Ibaraki (JP); Matsumoto, Sho, Hitachinaka-shi Ibaraki (JP)
(74) Representative: Beetz & Partner

(57) **Abstract**

A sealed battery includes a battery container (7). The battery container (7) houses an electrode winding body, on which positive and negative electrode plates are wound via separators, together with a non-aqueous electrolytic solution. A positive electrode tab is bonded to a positive current collector ring (4) arranged at an upper side of the electrode winding body. A battery lid (18) to be a positive electrode external terminal is crimped and fixed to the battery container (7). The battery lid (18) has a diaphragm in which a cleaving valve (12) is formed. A coupling part is bonded to the diaphragm, and a stack lead (9) with a plurality of thin plates being laminated is bonded to the coupling part. In the stack lead (9), a total sum t of thicknesses of the thin plates is not more than a thickness T of the coupling part. Melting from the stack lead (9) to the coupling part by laser irradiation is optimized.

## Description

### Background of the Invention

The present invention relates to a sealed battery and a producing method of the sealed battery, and particularly relates to a sealed battery including an electric power generator in which a positive electrode, a negative electrode and a separator are placed, an electrolytic solution in which the electric power generator is received, and a bottomed container housing the electric power generator and the electrolytic solution, and a producing method of the sealed battery.

Conventionally, in the sealed battery, an electric power generator in which a positive electrode, a negative electrode and a separator are placed is housed in a container with an electrolytic solution, and the container is sealed by a lid. In order to lead electricity from the electric power generator to an outside of the battery, the electric power generator and the lid are connected through a lead for electrical continuity. The lead is usually housed in the container in a curved state. In the case of such a sealed battery, in order to adapt the sealed battery to the use of a large current in such a case as to supply drive power for an automobile, for example, the sectional area of the lead needs to be made large, and the thickness of the lead is made large. When the thickness of the lead becomes large, the lead becomes difficult to curve, and the space required for housing the lead becomes large. The space in which the lead is housed is not related to power generation, and therefore, the space is desirably made small.

As the art of the lead in a sealed battery, the art is disclosed, which uses two leads constructed by laminating a plurality of thin plates by connecting the two leads, and using ultrasonic bonding for lamination of the thin plates (see JP-A-2004-152707). This art can enhance volume efficiency by making the housing space of the lead small.

### Brief Summary of the Invention

However, in the art of JP-A-2004-152707, in the above described use of the battery with high output power, the lead becomes a long path since the two leads are connected, and therefore, the electric resistance at the lead portion appears as the voltage drop at the time of charge and discharge (energization) and may cause an output power loss. If one lead that is led out from the electrode is connected to the lid as a relatively compact lithium secondary battery, for example, increase in the path of the lead can be avoided, but in order to reduce resistance by lamination of the lead, a limitation occurs to the bonding method of the lead end portion. In this respect, ultrasonic bonding is used in JP-A-2004-152707, but this is based on the principle that the objects to be bonded are bonded on the interface by receiving ultrasonic amplitude in the state in which the objects to be bonded are sandwiched between an ultrasonic horn and an anvil, and therefore, the counterpart object to be bonded to the lead is desirably a single component from the viewpoint of ultrasonic propagation. For example, in bonding of the assembly with a plurality of components being assembled and the lead, ultrasonic propagation is inhibited in the interface between the components constructing the assembly, and therefore, an influence appears in the bonding quality. Accordingly, in bonding to the assembly, the bonding method by ultrasound cannot be always said to be suitable, and energy irradiation type welding methods such as arc welding and laser welding are sometimes suitable.

In an energy irradiation type welding method, the energy which is irradiated to an object is converted into heat on the surface of the irradiated object to increase the temperature of the object, and when the temperature exceeds the melting point of the object, the object is melted. More specifically, it is the principle of welding that the interface of two objects is melted and solidified. Therefore, in a laminated lead, melt of the lead by irradiation needs to reach the object to be bonded such as a lid through the lamination interface. If a plurality of bonding interfaces are present, they become an obstacle in heat propagation and melting propagation in each of the interfaces, and therefore, welding needs to be performed by increasing the energy to be irradiated.

In this respect, in the art of JP-A-2004-152707, the lamination shift of the lead is suppressed by performing bonding to the lid after the stack lead is temporarily fastened in advance, but if temporarily fastened portion is too small, the lead may be bonded to the object to be bonded at the portion other than the temporarily fastened portion. However, even if the temporarily fastened portion is sufficiently large, a variation occurs to the space between the thin plates constituting the stack lead depending on the situation of temporarily fastening, and the sign undesirable for bonding may appear. For example, if the space between the thin plates constituting the lead is too large, the obstacle in heat propagation in irradiation of laser or the like becomes large, and therefore, melting of the stack lead does not reach the lid to result in a bonding failure. In contrast with this, if the space between the thin plates is too small, heat propagation in irradiation of laser or the like well advances, and excessively melts the lid to result in breakage of the lid and the like.

Further, in a sealed battery, a component having a valve mechanism is included in the lid, and opens the valve mechanism when the pressure inside the battery abnormally rises to make the pressure inside the battery the same as the pressure (atmospheric pressure) of the outside of the battery, and thereby, breakage of the battery is prevented. In this case, the component which is placed near the lid by being attached to the lid, or the like, a through-hole is desirably included in order that the internal pressure of the battery is prevented from becoming the trouble at the time of acting on the valve mechanism, and in order that even when the valve mechanism is opened, and when a large quantity of gas generates as a reaction product by abnormal electrode reaction and chemical reaction inside the battery, the large quantity of gas is prevented from becoming the obstacle in conduction of the gas to the valve mechanism. However, when the stack lead is connected to the component including the through-hole by laser welding or the like, if melting by welding reaches the through-hole, input heat accompanying welding does not have an escape route in the edge of the through-hole, and the heat concentrates on the edge. Therefore, the potential problem is present, that excessive melting occurs, a sputter and expulsion occur, laser-ablated pits (perforation) occur, and a normal bonding state cannot be obtained. Similarly, when melting by welding reaches the tip end and the side end of the stack lead, a normal bonding state sometimes cannot be obtained.

In welding, even for a short time, the temperature is temporarily raised to be a melting point of the object to be bonded or higher. In the case where the stack lead and the object to be bonded such as a lid are melted and bonded by irradiation of laser or the like from the stack lead side, it is almost certain that at the side of the lid or the like which does not abut on the stack lead, the temperature becomes high even though the temperature does not rise to the melting point by the heat by laser irradiation. Therefore, especially in the case of the components in the form of the thin plate having a valve mechanism, deformation and a distortion due to heat occur, and when the battery is abused, the valve is not opened at a desired pressure inside the battery. Therefore, the battery is broken, and on the contrary, the vale is opened early in the warm state at the time of normal use of the battery to be unable to keep hermeticity of the sealed battery, which is likely to result in leakage of the electrolytic solution by extension. From the above, it is desirable not to cause a trouble at the time of welding the lead and the coupling part and the lid, and the conduction route from the electric power generator to the lid is desirably secured.

In view of the above described matter in question, the present invention has an object to provide a sealed battery capable of ensuring electrical continuity between an electric power generator and a lid without causing a welding trouble, and a manufacturing method of the sealed battery.

According to the invention for solving the above problem, a sealed battery comprises an electric power generating body including a positive electrode, a negative electrode and a separator, an electrolyte receiving therein the electric power generating body, and a container including a bottom to contain therein the electric power generating body and the electrolyte, wherein the sealed battery further comprises: a current collector arranged to face to an end of the electric power generating body and electrically connected to a lead piece extending from one of the positive electrode and the negative electrode, a lid fixed to an opening of the container to operate as an terminal for the one of the positive electrode and the negative electrode, a plate member of electrical conductivity attached to a surface of the lid facing to the electric power generating body, and a lead electrically connecting the current collector and the plate member to each other, wherein the lead includes a stack of sheets, a thickness of the stack is not more than a thickness of the plate member, and the lead and the plate member are joined with a welding.

In a first aspect of the invention, since the lead electrically connecting the current collector and the plate member to each other has the stack of sheets, the lead can be bent with a small curvature for being received compactly by the container, and since the thickness of the stack is not more than the thickness of the plate member, a problem is not caused by the welding between the lead and the plate member so that an electric communication between the lid and the electric power generating body is kept securely.

In the first aspect, it is preferable that a fixed area through which adjacent ones of the sheets are fixed to each other is greater than a welded area through which the lead and the plate member are joined. It is preferable that the lid includes a plurality of element such as a valve mechanism, and the plate member has a through hole for ventilation. A welded area through which the lead and the plate member are joined, may be prevented from extending to the through hole. The welded area through which the lead and the plate member are joined, may be prevented from extending to an end of at least one of the sheets in a direction perpendicular to a stacking direction in which the sheets are stacked. It is preferable that the welded area through which the lead and the plate member are joined, is prevented from extending to the through hole and extending to the end of at least one of the sheets in the direction perpendicular to a stacking direction in which the sheets are stacked. The plate member may be arranged between the lead and the lid, and a space may be formed between the lid and an outer periphery of the plate member.

As a second aspect of the invention, a method for producing the sealed battery of the first aspect, comprising the steps of: performing an ultrasonic bonding to form a first joined area at which the sheets of the stack are fixed to each other so that the lead is formed, and irradiating the first joined area with a laser to form a second joined area on the first joined area so that the lead and the plate member are joined at the second joined area to be electrically connected to each other.

According to the invention, since the lead electrically connecting the current collector and the plate member to each other has the stack of sheets, the lead can be bent with a small curvature for being received compactly by the container, and since the thickness of the stack is not more than the thickness of the plate member, a problem is not caused by the welding between the lead and the plate member so that an electric communication between the lid and the electric power generating body is kept securely.

### Brief Description of the Several Views of the Drawings

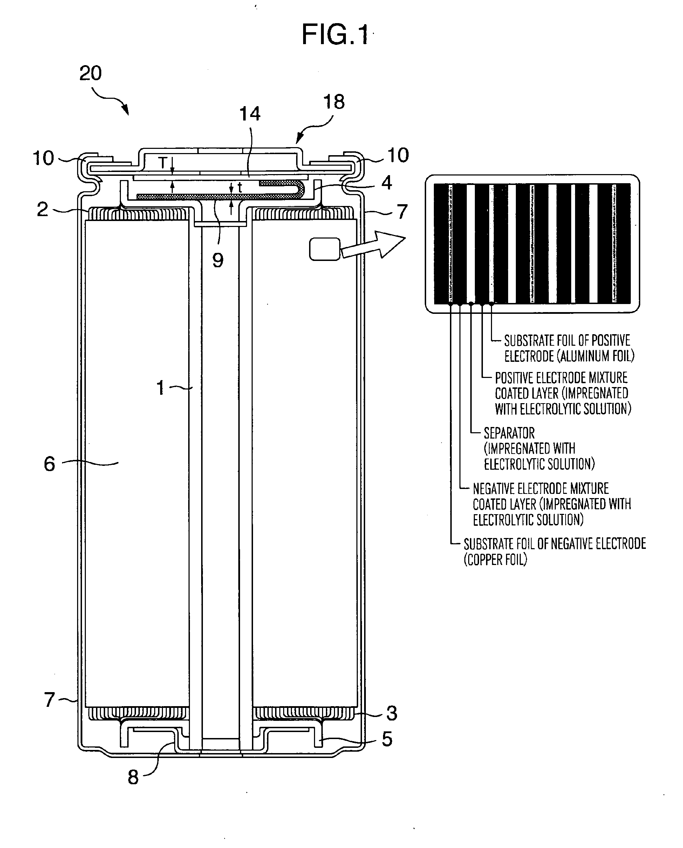

Fig. 1 is a sectional view schematically showing a cylindrical lithium ion secondary battery of an embodiment to which the present invention is applied;

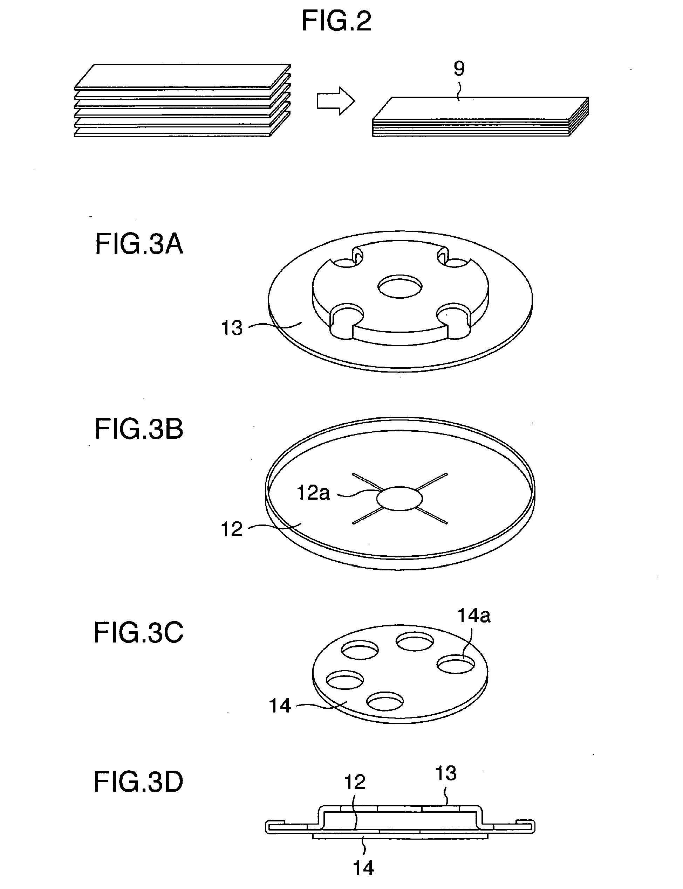

Fig. 2 is a sectional view schematically showing a constitution of a stack lead which is used for connecting an electrode winding body and a battery lid of the cylindrical lithium ion secondary battery of the embodiment;
Figs. 3A to 3D schematically show the battery lid and a coupling part of the cylindrical lithium ion secondary battery of the embodiment, Fig. 3A is a perspective view of a terminal plate placed at an outer side of the battery, Fig. 3B is a perspective view of a diaphragm placed at an inner side of the battery, Fig. 3C is a perspective view of a coupling part which is bonded to a side opposite from the terminal plate, of the diaphragm, and connected to the stack lead, and Fig. 3D is a sectional view showing a state in which the coupling part is connected to the diaphragm of the battery lid;

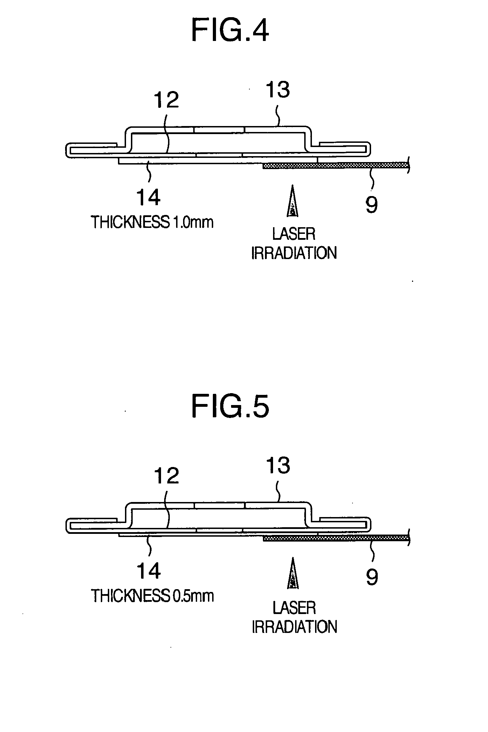

Fig. 4 is a sectional view schematically showing the positional relationship of a battery lid of a cylindrical lithium ion secondary battery of example 1, and the coupling part bonded to the diaphragm and the stack lead connected to the coupling part;
Fig. 5 is a sectional view schematically showing the positional relationship of a battery lid of a cylindrical lithium ion secondary battery of a comparative example, and a coupling part bonded to a diaphragm and a stack lead connected to the coupling part;

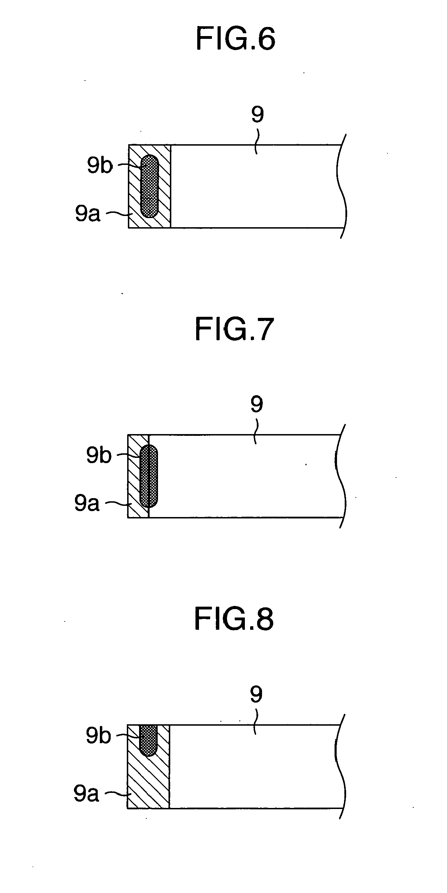

Fig. 6 is a plane view showing a stack lead used in a cylindrical lithium ion secondary battery of example 2, and schematically showing the positional relationship of an ultrasonic bonded part where thin plates are fixed to each other, and a laser welded part where the stack lead and the coupling part are melted and solidified to be welded, which is seen from the electrode winding body side;
Fig. 7 is a plane view showing a stack lead used in a cylindrical lithium ion secondary battery of example 3, and schematically showing the positional relationship of an ultrasonic bonded part where thin plates are fixed to each other, and a laser welded part where the stack lead and the coupling part are melted and solidified to be welded, which is seen from the electrode winding body side;
Fig. 8 is a plane view showing a stack lead used in a cylindrical lithium ion secondary battery of example 4, and schematically showing the positional relationship of an ultrasonic bonded part where thin plates are fixed to each other, and a laser welded part where the stack lead and the coupling part are melted and solidified to be welded, which is seen from the electrode winding body side;

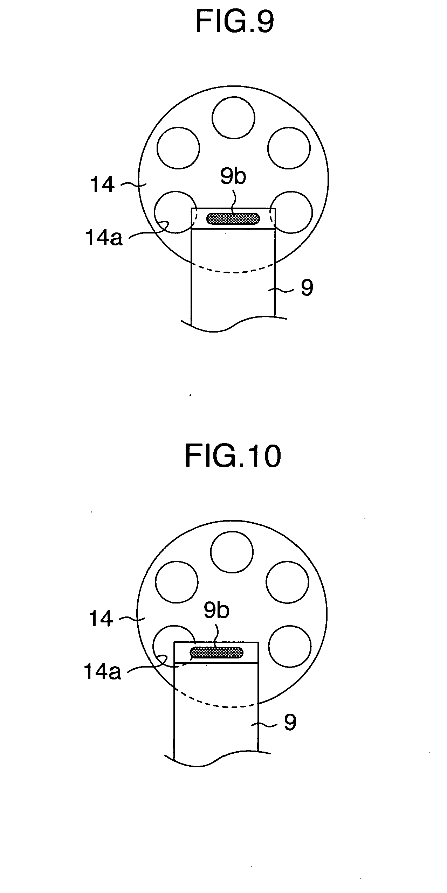

Fig. 9 is a plane view schematically showing the positional relationship of a coupling part and a stack lead which are used in a cylindrical lithium ion secondary battery of example 5, which is seen from an electrode winding body side;
Fig. 10 is a plane view schematically showing the positional relationship of a coupling part and a stack lead which are used in a cylindrical lithium ion secondary battery of example 6, seen from an electrode winding body side;

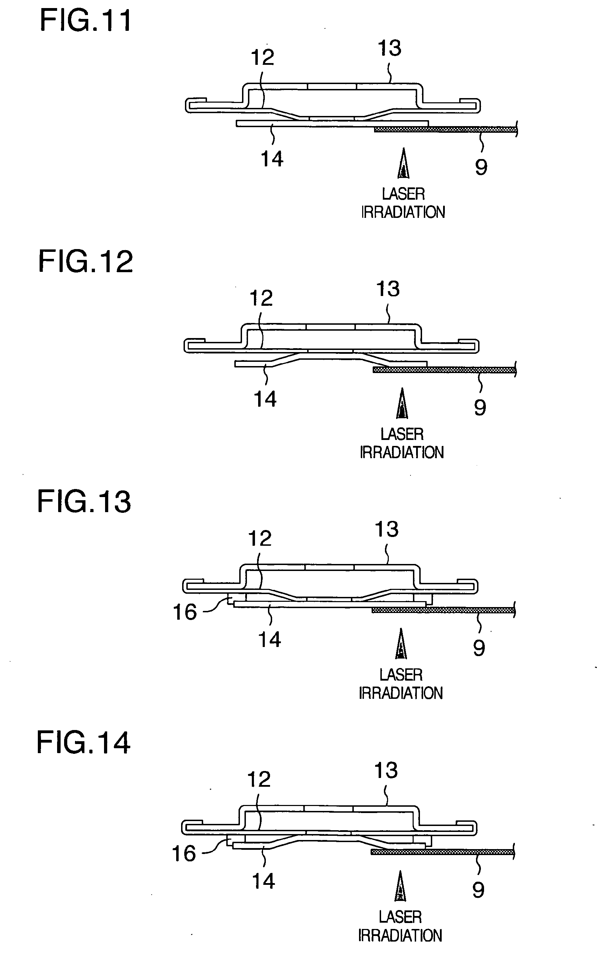

Fig. 11 is a sectional view schematically showing the positional relationship of a battery lid, a coupling part bonded to a diaphragm with a section in a stepped shape and a stack lead connected to the coupling part of a cylindrical lithium ion secondary battery of another mode, and showing a constitution in which a gap is formed between a peripheral edge portion of the coupling part and the battery lid;
Fig. 12 is a sectional view schematically showing the positional relationship of a battery lid, a coupling part bonded to a diaphragm and having a section in a stepped shape and a stack lead connected to the coupling part of a cylindrical lithium ion secondary battery of still another mode, and showing a constitution in which a gap is formed between a peripheral edge portion of the coupling part and the battery lid;
Fig. 13 is a sectional view schematically showing the positional relationship of a battery lid, a coupling part bonded to a diaphragm with a section in a stepped shape and a stack lead connected to the coupling part of a cylindrical lithium ion secondary battery of another mode, and showing a constitution in which a spacer is formed between a peripheral edge portion of the coupling part and the battery lid; and
Fig. 14 is a sectional view schematically showing the positional relationship of a battery lid, a coupling part bonded to a diaphragm and having a section in a stepped shape and a stack lead connected to the coupling part of a cylindrical lithium ion secondary battery of still another mode, and showing a constitution in which a spacer is formed between a peripheral edge portion of the coupling part and the battery lid.

### Detailed Description of the Invention

Hereinafter, with reference to the drawings, an embodiment of a cylindrical lithium ion secondary battery to which the present invention is applied will be described.

### (Constitution)

As shown in Fig. 1, a cylindrical lithium ion secondary battery 20 of the present embodiment includes a cylindrical bottomed-battery container 7 of steel with nickel plating being applied. The battery container 7 houses an electrode winding body 6 on which positive electrode plates and negative electrode plates are wound through separators so that the positive electrode plates and the negative electrode plates are not in contact with each other.

A cylindrical hollow winding core 1 of a polypropylene resin is used for a winding center of the electrode winding body 6. A positive current collector ring 4 having a ring shape for collecting a current from the positive electrode plate is disposed on a substantial extension line of the winding core 1. The positive current collector ring 4 is fixed to an upper end portion of the winding core 1. An end portion of a positive electrode tab 2 led out from the positive electrode plate is ultrasonically bonded to the peripheral surface of a flange portion integrally jutted out from the periphery of the positive current collector ring 4. A disk-shaped battery lid (lid) 18 to be a positive electrode external terminal is disposed above the positive current collector ring 4.

The battery lid 18 has a terminal plate 13 and a diaphragm 12 as shown in Fig. 3D. A coupling part 14 as a plate-shaped member having electrical conductivity is bonded to a surface of the diaphragm 12, which is opposite from the terminal plate 13, that is, a bottom surface (surface at the side of the electrode winding body 6) of the battery lid 18. The terminal plate 13 is made of steel and is formed into a disk shape as shown in Fig. 3A, and has a cylindrical projected portion projected upward in a central portion of the disk. A plurality of openings are formed in a side surface of the projected portion. The diaphragm 12, as shown in Fig. 3B, is made of aluminum and is formed into a disk shape, and a cleaving valve (gas exhaust valve) 12a as a valve mechanism which is made thin and cleaves in response to a rise in the internal pressure of the battery is formed in a central portion of the disk. The cleaving valve 12a is constituted of a ring-shaped portion and radial portions formed toward the outer circumferential side of the diaphragm 12 respectively from four spots of the ring portion. A peripheral edge portion of the terminal plate 13 is crimped to be covered with a peripheral edge portion of the diaphragm 12 and is integrated therewith. The coupling part 14 is made of aluminum and is formed into a disk shape as shown in Fig. 3C. The terminal plate 13 constituting the battery lid 18 is made of steel, the diaphragm 12 is made of aluminum, and the coupling part 14 is made of aluminum, and therefore, the coupling part 14 has higher conductivity than the battery lid 18. In the coupling part 14, circular through-holes 14a which are ventilable are formed at five spots at the outer circumferential side from the central portion. A thickness T of the coupling part 14 is set at 1.0 mm in this example.

As shown in Fig. 1, a stack lead 9 which defines a conductive path between the electrode winding body 6 and the battery lid 18 is bonded to an undersurface of the coupling part 14. The stack lead 9 is constituted by a plurality of rectangular thin plates of aluminum being laminated (superposed) on one another as shown in Fig. 2. The stack lead 9 is formed by six thin plates of a thickness of 0.1 mm, a width of 10 mm and a length of 30 mm being laminated in the present embodiment. In the stack lead 9, the total sum t of the thicknesses of the six thin plates is 0.6 mm, and is not more than a thickness T (1.0 mm) of the coupling part 14. In the stack lead 9, the six laminated thin plates are ultrasonically bonded and fixed at one end portions in the longitudinal direction, and an ultrasonic bonded part (first bonded part) 9a is formed.

The stack lead 9 is bonded to the undersurface of the coupling part 14 at one end portion where the ultrasonic bonded part 9a is formed by laser welding, and the other end portion is ultrasonically bonded to an upper portion of the positive current collector ring 4, as shown in Fig. 1. More specifically, in the lithium ion secondary battery 20, by electrical continuation of the positive electrode plate, the positive current collector ring 4, the stack lead 9, the coupling part 14 and the battery lid 18, the conduction path at the side of the positive electrode is defined. As shown in Fig. 6, a laser welded part (second bonded part) which is formed by the stack lead 9 and the coupling part 14 being bonded to each other is formed to have an area smaller than that of the ultrasonic bonded part 9a. In other words, in the stack lead 9, lamination of the thin plates are fixed with the ultrasonic bonded part 9a having the area larger than the laser welded part 9b which is bonded to the coupling part 14. The laser welded part 9b is formed so as not to reach one end in the longitudinal direction of the thin plates constituting the stack lead 9 and both ends in the direction intersecting the longitudinal direction. More specifically, the laser welded part 9b is formed within the range of the ultrasonic bonded part 9a, and is within the lamination surface of the thin plates. Further, as shown in Fig. 9, the stack lead 9 is bonded to a part where the through-holes 14a are not formed so that the range of the laser welded part 9b does not reach the through-holes 14a of the coupling part 14.

Meanwhile, as shown in Fig. 1, a ring-shaped negative current collector ring 5 for collecting a current from the negative electrode plate is disposed at a lower side of the electrode winding body 6. An outer circumferential surface of the lower end portion of the winding core 1 is fixed to the inner circumferential surface of the negative current collector ring 5. An end portion of a negative electrode tab 3 led out from the negative electrode plate is ultrasonically bonded to the outer circumferential surface of the negative current collector ring 5. A negative electrode lead plate 8 for electrical continuation is bonded to a lower portion of the negative current collector ring 5 by welding. The negative electrode lead plate 8 is bonded to the inner bottom portion of the battery container 7 which also functions as the negative electrode external terminal by resistance welding.

Further, a non-aqueous electrolytic solution is filled in the battery container 7. In this embodiment, the non-aqueous electrolytic solution is used, which is prepared by dissolving lithium hexafluorophosphate (LiPF6) into the organic solvent mixture with a volume ratio of ethylene carbonate and dimethyl carbonate of 2 to 3 so that the concentration of lithium hexafluorophosphate becomes 1 mol/litter is used. The battery lid 18 is crimped and fixed to the upper portion of the battery container 7 via a gasket 10 of polypropylene. The stack lead 9 is housed in the battery container 7 in the curved state. Therefore, the inside of the lithium ion secondary battery 20 is sealed.

In the electrode winding body 6 which is housed in the battery container 7, the positive electrode plates and the negative electrode plates are wound around the winding core 1 through microporous separators of polyethylene, for example. The positive electrode tab 2 and the negative electrode tab 3 are arranged at both end surfaces at the opposite sides of the electrode winding body 6. An insulating coating is applied to the entire circumferential surfaces of the electrode winding body 6 and the flange portion of the positive current collector ring 4 to prevent electric contact with the battery container 7. For the insulating coating, an adhesive tape coated with an adhesive agent of hexa metha acrylate on one side surface of the base material of polyimide is used. The adhesive tape is wound by not less than one layer over the outer circumferential surface of the electrode winding body 6 from the circumferential surface of the flange portion of the positive electrode collector ring 4.

The positive electrode plate constituting the electrode winding body 6 has an aluminum foil as the positive current collector. Both surfaces of the aluminum foil are substantially uniformly coated with a positive electrode mixture containing a positive electrode power generating substance (active material). An auxiliary agent, a binder (binding material) and the like are mixed in the positive electrode mixture, in addition to the generating substance. The positive electrode plate is formed by being coated with the positive electrode mixture on the aluminum foil and pressed after being dried. An uncoated portion which is not coated with the positive electrode mixture is formed at a side edge of one side in the long size direction of the aluminum foil. The uncoated portion is notched in a comb shape, and the positive electrode tab 2 is formed by the remaining portion of the notch. In this embodiment, the space between the adjacent positive electrode tabs 2 is set at 50 mm, and the width of each of the positive electrode tabs is set at 5 mm. Meanwhile, the negative electrode plate has a copper foil as the negative current collector. A negative electrode mixture containing a power generating substance of a negative electrode is substantially uniformly coated on both surfaces of a copper foil. A conductive material, a binder and the like are mixed in the negative electrode mixture, in addition to the negative electrode active material.

The negative electrode plate is formed by being coated with the negative electrode mixture on the copper foil and pressed after being dried. An uncoated portion with the negative electrode mixture is formed at a side edge of one side in the long size direction of the copper foil similarly to the positive electrode plate, and the negative electrode tab 3 is formed.

### (Manufacture)

In manufacture of the lithium ion secondary battery 20, the electrode winding body 6 is made by winding the positive electrode plates and the negative electrode plates, which are produced, around the winding core 1 via separators. At this time, the separator is fixed to the winding core 1 with a tape or the like, and after only the separator is wound about two to three turns at the beginning of winding, the positive electrode plate and the negative electrode plate are wound so that the positive electrode plate and the negative electrode plate are properly opposed to each other, and the positive electrode tab 2 and the negative electrode tab 3 are located in the direction opposite to each other. After the positive electrode plates and negative electrode plates are all wound, the separator is wound by about two to three turns at the end of winding so that the electrodes are not exposed at the outermost periphery. Next, after the positive electrode tabs 2 are deformed, and all of them are gathered and contacted in the vicinity of the circumferential surface of the flange portion which is integrally protruded from the periphery of the positive electrode current collector ring 4, the positive electrode tab 2 and the circumferential surface of the flange portion are connected by ultrasonic bonding. Meanwhile, an operation of connecting the negative current collector ring 5 and the negative electrode tab 3 is carried out similarly to the operation of connecting the positive current collector ring 4 and the positive electrode tab 2. Thereafter, insulation coating is applied to the entire circumferential surface of the flange portion of the positive current collector ring 4 and the electrode winding body 6. The negative electrode lead plate 8 is welded to the negative current collector ring 5 in advance, and the electrode winding body 6 with the positive current collector ring 4 and the negative current collector ring 5 being attached is inserted into the battery container 7 with the negative current collector ring 5 facing the bottom side. An electrode rod is inserted through the hollow portion of the winding core 1 to the bottom portion of the battery container 7, and the bottom portion of the battery container 7 and the negative electrode lead plate 8 are resistance-welded.

Meanwhile, the stack lead 9 is ultrasonically bonded to the positive current collector ring 4 in advance (before the tab is bonded to the current collector ring), and the other end of the stack lead 9 is connected to the undersurface of the coupling part 14 by a mode and a method which will be described later. The coupling part 14 is joined to the diaphragm 12 of the battery lid 18 by welding in advance, and is kept in the state attached to the battery lid 18. The reason why the coupling part 14 is attached to the battery lid 18 in advance is as follows.

In this case, it is assumed that the stack lead 9 bonded to the positive current collector ring 4 and the coupling part 14 are already connected when the bottom portion of the battery container 7 and the negative electrode lead plate 8 are resistance-welded after the electrode winding body 6 to which the positive current collector ring 4 and the negative current collector ring 5 are attached is housed in the battery container 7. In this case, undesirable situations are easily predicted, in which the coupling part 14 becomes an obstacle at the time of inserting the electrode rod for use in resistance welding through the winding core 1, a shunt current occurs to the current at the time of resistance welding as a result of the electrode rod and the coupling part 14 connected to the stack lead 9 are in contact with each other, and the like. In order to avoid these situations, the bottom portion of the battery container 7 and the negative electrode lead plate 8 are desirably resistance-welded in the state in which the coupling part 14 is not connected to the stack lead 9 connected to the positive current collector ring 4. The stack lead 9 has flexibility since the stack lead 9 is the lamination body of the thin plates. Therefore, the stack lead 9 can be kept away from the electrode rod by being easily curved or bent so as not to be in contact with the electrode rod.

After the bottom portion of the battery container 7 and the negative electrode lead plate 8 are resistance-welded, the coupling part 14 is connected to the other end portion of the stack lead 9, and the coupling part 14 and the battery lid 18 (diaphragm 12) can be connected. However, as described above, the stack lead 9 has flexibility, in other words, the stack lead 9 does not have rigidity. Therefore, at the time of bonding the stack lead 9 and the coupling part 14, the stack lead 9 needs to be positioned and temporarily fixed so as not to move, and needs to be handled by using a suitable jig. Further, at the time of bonding the coupling part 14 to which the stack lead 9 is bonded and the battery lid 18, the stack lead 9 needs to be positioned and temporarily fixed so as not to move similarly due to lack of rigidity of the stack lead 9, and in this case, handling with a jig is also needed. Though handling can be performed by using the jig, guiding the stack lead 9 without rigidity to a fig, and fixing the stack lead 9 even temporarily cannot be said to be easy especially in the case of connecting them in automated facilities of industrial production and the like. In contrast with this, if the coupling part 14 is bonded to the diaphragm 12 constituting the battery lid 18 in advance, the chance of bonding the stack lead 9 without rigidity becomes only one, and the process of using the jig which becomes a difficult work can be minimized.

For such a reason, after the stack lead 9 is bonded to the positive current collector ring 4, and the electrode winding body 6 is housed in the battery container 7, the inner bottom portion of the battery container 7 and the negative lead plate 8 are resistance-welded. Next, the coupling part 14 which is bonded to the diaphragm 12 of the battery lid 18 in advance, and the stack lead 9 are bonded by laser welding. At this time, the stack lead 9 (ultrasonic bonded part 9a) and the coupling part 14 are caused to abut on each other, a laser beam is irradiated to the ultrasonic bonded part 9a from the stack lead 9 side, and the laser welded part 9b is formed. After a non-aqueous electrolytic solution is filled in the battery container 7, the stack lead 9 is housed in such a manner as to be folded, and the battery lid 18 is crimped and fixed to the battery container 7 via the gasket 10, whereby the lithium ion secondary battery 20 is completed.

### Examples

Next, examples of the lithium ion secondary battery 20 which is manufactured in accordance with the present embodiment will be described. A comparative example which is manufactured for comparison will be also described together with the examples.

### (Example 1)

In example 1, the coupling part 14 with a thickness T of 1.0 mm was ultrasonically bonded to the diaphragm 12 of the battery lid 18 as shown in Fig. 4. The stack lead 9 (ultrasonic bonded part 9a) was brought into contact with the side of the coupling part 14, which was opposite from the battery lid 18, a laser beam was irradiated from the stack lead 9 side (lower side of the drawing), and the stack lead 9 and the coupling part 14 were welded. For laser oscillation, YLR-2000 made by IPG Photonics Corporation was used, and for the machining head, YW-50 made by Precitec Corporation was used. Irradiated laser was set at a focal length of 200 mm, output power of 750W, a beam diameter of 0.2 mm and a scanning speed of 3 m/min. The laser irradiation was performed with a length of 6 mm in the width direction of the stack lead 9, and this was irradiated in three rows at intervals of 1 mm. As a result of irradiation, the melting width of the three rows (length in the longitudinal direction of the stack lead 9) became about 3 mm. By crimping and fixing the battery lid 18 to the battery container 7; the lithium ion secondary battery 20 of example 1 was produced.

### (Comparative Example)

In the comparative example, as shown in Fig. 5, a lithium ion secondary battery was produced similarly to example 1 except that the thickness T of the coupling part 14 was set at 0.5 mm. In the comparative example, the total sum t (0.6 mm) of the thicknesses of the thin plates constituting the stack lead 9 becomes larger than the thickness T of the coupling part 14.

### (Example 2)

In example 2, as shown in Fig. 6, the ultrasonic bonded part 9a was formed by ultrasonic bonding over the entire width to 5 mm from one end (side bonded to the coupling part 14) of the stack lead 9, and the thin plates were fixed to one another. The stack lead 9 and the coupling part 14 were welded by laser irradiation. The position of irradiation of the laser beam was kept within the range of the ultrasonic bonded part 9a without extending from the ultrasonic bonded part 9a, the end and the side end of the stack lead 9. The thickness T of the coupling part 14 was set at 1.0 mm which was the same as that of example 1. In the laser irradiation, only the output power was reduced to 650 W with respect to the conditions of example 1.

### (Example 3)

In example 3, as shown in Fig. 7, the ultrasonic bonded part 9a was formed by ultrasonic bonding over the entire width to 3 mm from one end (side bonded to the coupling part 14) of the stack lead 9, and the thin plates were fixed to one another. The stack lead 9 and the coupling part 14 were welded by laser irradiation. The position of irradiation of the laser beam was located at the position which does not remain within the range of the ultrasonic bonded part 9a so as not to extend from the end and the side end of the stack lead 9 but to extend to the portion which is not ultrasonically bonded from the ultrasonic bonded part 9a. The thickness T of the coupling part 14, the laser and the irradiation conditions were set at the same as those of example 2.

### (Example 4)

In example 4, as shown in Fig. 8, the ultrasonic bonded part 9a was formed by ultrasonic bonding over the entire width to 5 mm from one end (side bonded to the coupling part 14) of the stack lead 9, and the thin plates were fixed to one another. The stack lead 9 and the coupling part 14 were welded by laser irradiation. The position of irradiation of the laser beam was located at the position which extended from the side end of the stack lead 9 and did not remain within the range of the ultrasonic bonded part 9a. The thickness T of the coupling part 14, the laser and the irradiation conditions were set at the same as those of example 2.

### (Example 5)

In example 5, as shown in Fig. 9, the ultrasonic bonded part 9a was formed by ultrasonic bonding over the entire width to 5 mm from one end (side bonded to the coupling part 14) of the stack lead 9, and the thin plates were fixed to one another. The stack lead 9 and the coupling part 14 were welded by laser irradiation. The position of irradiation of the laser beam was kept within the range of the ultrasonic bonded part 9a without extending from the ultrasonic bonded part 9a of the stack lead 9, and was set at the position which did not reach the through-hole 14a of the coupling part 14 located at the back side of the stack lead 9 seen from the irradiation side of the laser beam. The thickness T of the coupling part 14, the laser and the irradiation conditions were set as the same as those of example 2.

### (Example 6)

In example 6, as shown in Fig. 10, the ultrasonic bonded part 9a was formed by ultrasonic bonding over the entire width to 5 mm from one end (side bonded to the coupling part 14) of the stack lead 9, and the thin plates were fixed to one another. The stack lead 9 and the coupling part 14 were welded by laser irradiation. The position of irradiation of the laser beam was kept within the range of the ultrasonic bonded part 9a without extending from the ultrasonic bonded part 9a of the stack lead 9, but was set at the position which reaches the through-hole 14a of the coupling part 14 located at the back side of the stack lead 9 seen from the irradiation side of the laser beam. The thickness T of the coupling part 14, the laser and the irradiation conditions were set as the same as those of example 2.

### (Evaluation)

For each of the examples and comparative example, the welding situations of the stack leads 9 and the coupling parts 14 of 100 batteries were evaluated. As the welded situation, the number of the situations in which the stack leads 9 and the coupling parts 14 were not be able to be welded, the number of welding pits which occurred to the coupling parts 14, the number of expulsions which occurred to the stack lead 9, and the number of expulsions which occurred to the coupling part 14 were evaluated. The evaluation result of the welding situations is shown in the following Table 1. In Table 1, hyphen marks indicate that the subjects are not under evaluation.

**[Table 1]**

| EXAMPLE COMPARATIVE EXAMPLE | DRAWING | NUMBER OF WELDING FAILURES | OCCURRENCE OF THROUGH-HOLES (PITS) IN COUPLING PARTS 14 | OCCURRENCE OF THROUGH-HOLES (PITS) IN LAMINATION LEADS 9 | OCCURRENCE OF EXPULSIONS IN ENDS OF LAMINATION LEADS 9 | OCCURRENCE OF EXPULSIONS IN COUPLING PARTS 14 |
|---|---|---|---|---|---|---|
| EXAMPLE 1 | Fig. 4 | 2 | 2 | 6 | - | - |
| COMPARATIVE EXAMPLE | Fig. 5 | 2 | 6 | 6 | - | - |
| EXAMPLE 2 | Fig. 6 | 0 | 0 | 0 | 0 | 0 |
| EXAMPLE 3 | Fig. 7 | 0 | 0 | 2 | 0 | 0 |
| EXAMPLE 4 | Fig. 8 | 0 | 0 | 0 | 8 | 0 |
| EXAMPLE 5 | Fig. 9 | 0 | 0 | 0 | 0 | 0 |
| EXAMPLE 6 | Fig. 10 | 0 | 0 | 2 | 0 | 2 |

As shown in Table 1, in the comparative example, six welding pits occurred to the coupling parts 14, whereas in example 1, only two welding pits occurred. This can be regarded as the result that melting by laser irradiation excessively extended to the coupling parts 14 from the stack leads 9. In this regard, as the result of decreasing the irradiation energy of the laser in order to reduce melting to the coupling part 14, occurrence of the welding pits to the coupling parts 14 was able to be eliminated, but in this case, the number of welding failures increased to five from two written in Table 1. Further, in this regard, when the irradiation energy of the laser was decreased similarly in the comparative example, occurrence of the welding pits in the coupling parts 14 was able to be eliminated, but the number of welding failures increased to eight from two written in Table 1. From this, it is conceivable that the stack lead 9 has the interfaces among the thin plates, the gaps were formed depending on the case, the gap amount varies depending on the lamination state, and therefore, a trouble occurred to heat propagation by laser irradiation, as a result of which, melting did not reach the coupling part 14. Further, in both the comparative example and example 1, the same number of welding pits occurred to the stack leads 9. This is also considered to be the result that because heat propagation of laser irradiation became worse, in other words, heat dissipation hardly advanced due to the interfaces and gaps among the thin plates constituting the stack lead 9, heat accumulated in the thin plates to increase the temperature rapidly, the temperature exceeded the melting point of aluminum which was the raw material of the thin plates in a short time, and the situation close to explosion was generated.

In example 2, the trouble of a welding failure did not occur, a welding pit in the coupling parts 14 or a welding pit in the stack lead 9 did not occur. It is considered as the effect of removing the trouble of heat propagation by laser irradiation due to gaps as a result that the gaps as described above were not formed since the stack lead 9 is fixed by ultrasonic bonding in advance before the laser irradiation. The reason why the output power of the laser was reduced to 650 W for example 2 and the following examples is that since the trouble of heat propagation by laser irradiation was eliminated by fixing the thin plates of the stack lead 9 in advance, the output power of 750 W causes excessive welding, and due to a new trouble such as an increase in welding sputter and improper excessive irradiation, occurrence of welding pits, expulsions and the like of the stack lead 9 and the coupling parts 14 was anticipated.

In example 3, the trouble of a welding failure, or welding pits of the coupling parts 14 did not occur, but welding pits occurred to the stack leads 9. The welding pits of the stack leads 9 occurred to the spots exceeding the range of the ultrasonic bonded part 9a which was formed in advance in the stack lead 9. The spot was where the interface between the thin plates of the stack lead 9 and the gap were formed, and therefore, the welding pits are considered to occur for the same reason as in the aforementioned description of example 1.

In example 4, the trouble of a welding failure, a welding pit of the coupling part 14 and the welding pit of the stack lead 9 did not occur, but expulsions (which indicates the state in which a part of the welded object is scattered and lost by the heat of irradiation, occurs to the end of the welded object, and is distinguished from a pit which is a hole formed in the part other than the end portion) occurred to the side end portion of the stack lead 9. This is considered as a result that the laser irradiation reached the side end portion of the stack lead 9, heat dissipation by irradiation became worse, heat accumulated in the side end portion of the stack lead 9 to increase the temperature rapidly, and the temperature exceeds the melting point of aluminum which is the raw material of the thin plates in a short time to result in expulsions.

In example 5, no trouble was observed. In contrast with this, in example 6, welding pits in the stack leads 9 and expulsions in the end portions of the through-holes 14a of the coupling parts 14 occurred. This is considered as follows. In example 6, laser irradiation reached the through-holes 14a of the coupling parts 14 located at the back sides of the stack leads 9 seen from the irradiation sides, and therefore, laser is irradiated to the portions of the stack leads 9 corresponding to the through-holes 14a. As a result, the heat propagating in the stack leads 9 had nothing in which the heat propagated from those portions, and heat dissipation was worsened. Thus, heat accumulated to increase the temperature rapidly to exceed the melting point of aluminum which was the raw material of the thin plates in a short time, and therefore, caused welding pits. In the end portions of the through-holes 14a, the spots with unfavorable heat dissipation were similarly made, and therefore, expulsions of the coupling parts 14 were caused.

As is obvious from each of the above examples and comparative example, the method is suitable, in which the thin plates constituting the stack lead 9 are fixed by ultrasonic bonding in advance, and the stack lead 9 and the coupling part 14 are welded by laser irradiation from the stack lead 9 side. However, in welding by energy irradiation of laser or the like, the irradiation energy is converted into heat on the surface of the object to be welded, and the heat propagates through the object to be welded. Therefore, if the substances (components and the like) other than the object to be welded are in contact with the object to be welded, heat also propagates through the substances other than the object to be welded even though the substances are not melted. After careful consideration of this point, it is obviously desirable that the battery lid 18, especially, the diaphragm 12 constituting the battery lid 18 and the coupling part 14 are not in contact with each other at the outer circumferential side (a space is formed between the coupling part 14 and the battery lid) from the view point of suppression of thermal deformation of the diaphragm 12, and by extension, a deviation of the operation pressure of the cleaving valve 12a formed in the diaphragm 12. This can be realized by doing as follows, for example. Namely, as shown in Fig. 11, the constitution can be adopted, in which the sectional shape of the diaphragm 12 is formed into a stepped shape, and the gap is formed between the peripheral edge portion of the coupling part 14 and the battery lid 18. In this case, the projected portion which projects to the side of the coupling part 14 is formed in the central portion of the diaphragm 12, and the diaphragm 12 is bonded to the coupling part 14 at the projected portion. Further, as shown in Fig. 12, the constitution can be adopted, in which the sectional shape of the coupling part 14 is formed into a stepped shape, and the gap is formed between the peripheral edge portion of the coupling part 14 and the battery lid 18. In this case, the projected portion which projects to the diaphragm 12 side is formed in the central portion of the coupling part 14, and the coupling part 14 is bonded to the diaphragm 12 at the projected portion.

Supplementing the description, in the constitutions shown in Figs. 11 and 12, there is the possibility of occurrence of instability of the coupling part 14 by placement or pressing of the stack lead 9 onto the coupling part 14 at the time of welding of the stack lead 9 to the coupling part 14. In order to avoid this, it is effective to place a spacer between the peripheral edge portion of the coupling part 14 and the battery lid 18. For example, as shown in Fig. 13, instability at the time of welding can be suppressed by placing a spacer 16 in a gap formed between the diaphragm 12 with the section in a stepped shape and the peripheral edge portion of the coupling part 14. Further, as shown in Fig. 14, instability at the time of welding can be suppressed by placing the spacer 16 in the gap formed between the peripheral edge portion of the coupling part 14 with a section in a stepped shape and the diaphragm 12. It goes without saying that if the spacer 16 juts out to the back side of the laser irradiation position, the spacer is subjected to a heat damage, which is unfavorable.

### (Operation and the like)

Next, the operation and the like of the cylindrical lithium ion secondary battery 20 of the present embodiment will be described.

In the present embodiment, the stack lead 9 and the coupling part 14 are interposed between the electrode winding body 6 and the battery lid 18 which also functions as the positive electrode external terminal, and the stack lead 9 and the coupling part 14 are bonded by laser welding. The stack lead 9 is constructed by laminating six thin plates, the total sum t of the thicknesses of the thin plates is set at not more than the thickness T of the coupling part 14. Therefore, by performing laser irradiation from the side of the stack lead 9 at the time of laser welding of the stack lead 9 and the coupling part 14, melting from the stack lead 9 to the coupling part 14 by laser irradiation is optimized, and therefore, the stack lead 9 and the coupling part 14 can be bonded without occurrence of a welding trouble such as a welding pit and a welding expulsion. Further, by using energy irradiation type laser welding for bonding of the stack lead 9 and the coupling part 14, the bonding quality can be improved. Accordingly, electrical continuity between the electrode winding body 6 and the battery lid 18 can be secured.

Further, in the present embodiment, the stack lead 9 has flexibility because it is constituted of six thin plates. Therefore, the rigidity of the stack lead 9 becomes low, and the stack lead 9 can be easily curved or bent. When the battery lid 18 is crimped and fixed to the battery container 7, the stack lead 9 is housed in the battery container 7 in the curved state. Thereby, the space which is not related to power generation becomes small in the battery container 7, and therefore, the lithium ion secondary battery 20 can be made compact.

Further, in the present embodiment, the thin plates constituting the stack lead 9 are ultrasonically bonded at one end portions in the longitudinal direction, and the ultrasonic bonded part 9a is formed. In the ultrasonic bonded part 9a, the respective thin plates are fused at the interfaces (lamination surfaces), and are integrated without a gap being formed. Further, the ultrasonic bonded part 9a is formed to have the area larger than the laser welded part 9b formed by laser welding of the stack lead 9 and the coupling part 14. Accordingly, the stack lead 9 and the coupling part 14 can be reliably bonded without occurrence of a displacement at the time of laser welding of the stack lead 9 and the coupling part 14, while energy transmission by laser irradiation is hindered if a gap is formed between the thin plates.

Furthermore, in the present embodiment, the laser welded part 9b in the melting range by laser irradiation does not reach the through-hole 14a of the coupling part 14. Namely, the laser welded part 9b is formed in the portion where the through-hole 14a of the coupling part 14 is not formed. Therefore, occurrence of a welding trouble in the end of the through-hole 14a with laser irradiation can be suppressed. Thereby, electrical continuity between the coupling part 14 and the stack lead 9 is secured, and permeability of the through-hole 14a can be secured.

Furthermore, in the present embodiment, the laser welded part 9b does not reach the end and the both ends in the width direction of the stack lead 9 (ultrasonic bonded part 9a). That is, the laser welded part 9b is formed within the range of the ultrasonic bonded part 9a. Therefore, performing laser irradiation to the portion without the stack lead 9, that is, performing laser irradiation directly to the coupling part 14, and performing laser irradiation to the portion to which the thin plates constituting the stack lead 9 are not ultrasonically bonded can be avoided. When laser irradiation is performed directly to the coupling part 14, energy accompanying laser irradiation is transmitted to the battery lid 18, especially to the diaphragm 12, and therefore, the operation of the cleaving groove 12a is likely to be made unstable. Further, when laser irradiation is applied to the portion of the stack lead 9 which is not ultrasonically bonded, a welding trouble may occur due to the gap or the like between the thin plates. Accordingly, by forming the laser welded part 9b within the ultrasonic bonded part 9a, a trouble accompanying the laser irradiation can be avoided.

Further, in the present embodiment, the through-hole 14a which is ventilable is formed in the coupling part 14. Therefore, when the internal pressure of the battery rises due to generation of gas at the time of a battery abnormality or the like, the pressure can be transmitted to the battery lid 18 side through the through-hole 14a. Thereby, the cleaving groove 12a formed in the diaphragm 12 which constitutes the battery lid 18 is operated, whereby the internal pressure of the battery is released to the outside of the battery. Therefore, safety at the time of a battery abnormality can be ensured.

Further, in the present embodiment, at the time of manufacture of the lithium ion secondary battery 20, the stack lead 9 is bonded to the positive current collector ring 4 attached to the electrode winding body 6, and the coupling part 14 is bonded to the diaphragm 12 constituting the battery lid 18. After the negative electrode side of the electrode winding body 6 inserted in the battery container 7 is connected, the stack lead 9 and the coupling part 14 are bonded by laser welding. At this time, even if the laser is to be irradiated from the battery lid 18 side, the component of the battery lid 18 blocks the laser, and the coupling part 14 is not irradiated with the laser. Therefore, the laser has to be irradiated from the stack lead 9 side. According to the manufacturing method described in the present embodiment, the stack lead 9 and the coupling part 14 can be bonded by laser welding without being inhibited by the electrode winding body 6 and the battery lid 18. Further, as described above, in order that the stack lead 9 without rigidity is bonded, the stack lead 9 without rigidity needs to be positioned by a jig or the like, but in the manufacturing method described in the present embodiment, the bonding operation requiring such positioning can be performed at one time. Thereby, the operation at the time of battery manufacture can be simplified.

In the present embodiment, the cylindrical lithium ion secondary battery 20 is described as an example, but the present invention is not limited to this, and the present invention is applicable to general sealed batteries. The positive electrode active material, the negative electrode active material, the electrolytic solution and the like are not limited as a matter of course. Further, in the present embodiment, the electrode winding body 6 on which the positive and negative electrode plates are wound via the separators is described as an example, but the present invention is not limited to this, and for example, the electrode lamination body in which rectangular positive and negative electrode plates are laminated via separators may be used. The battery shape is not specially limited, and the present invention also can be applied to, for example, a square battery other than a cylindrical one.

Further, in the present embodiment, the example is described, in which the stack lead 9 is constituted of six thin plates, and the thickness, width and length of the thin plate are described as examples, but the present invention is not limited to these conditions. Further, about bonding of the stack lead 9 and the coupling part 14, the laser and the irradiation conditions of it are described as examples, but it goes without saying that the present invention is not limited to them.

Further, in the present embodiment, the example in which the circular through-holes 14a are formed at the five spots in the coupling part 14 is described, but the present invention is not limited to the shape and the number of the through-holes. The coupling part 14 and the stack lead 9 only has to be bonded so that the laser welded part 9b which is formed by bonding to the stack lead 9 does not reach the through-holes.

Since the present invention provides the sealed battery which can secure electrical continuity between the electric power generator and the lid body without causing a welding trouble and a manufacturing method of the sealed battery, the present invention contributes to manufacture and sales of the sealed batteries, and therefore, has industrial applicability.

## Claims

1. A sealed battery comprising an electric power generating body including a positive electrode , a negative electrode and a separator, an electrolyte receiving therein the electric power generating body, and a container (7) including a bottom to contain therein the electric power generating body and the electrolyte,
wherein the sealed battery further comprises:
a current collector (4) arranged to face to an end of the electric power generating body and electrically connected to a lead piece (2) extending from one of the positive electrode and the negative electrode,
a lid (18) fixed to an opening of the container to operate as an terminal for the one of the positive electrode and the negative electrode,
a plate member (14) of electrical conductivity attached to a surface of the lid facing to the electric power generating body, and
a lead (9) electrically connecting the current collector (4) and the plate member (14) to each other,
wherein the lead (9) includes a stack of sheets, a thickness of the stack is not more than a thickness of the plate member (14), and the lead (9) and the plate member (14) are joined with a welding.

2. The sealed battery according to claim 1,
wherein a fixed area (9a) through which adjacent ones of the sheets are fixed to each other is greater than a welded area (9b) through which the lead (9) and the plate member (14) are joined.

3. The sealed battery according to claim 1 or 2, wherein the lid (18) includes a plurality of elements such as a valve mechanism (12), and the plate member (14) has a through hole (14a) for ventilation.

4. The sealed battery according to claim 3, wherein a welded area (9b) through which the lead (9) and the plate member (14) are joined, is prevented from extending to the through hole (14a).

5. The sealed battery according to any one of claims 1-4, wherein a welded area (9b) through which the lead (9) and the plate member (14) are joined, is prevented from extending to an end of at least one of the sheets (9) in a direction perpendicular to a stacking direction in which the sheets are stacked.

6. The sealed battery according to any one of claims 1-5, wherein the plate member (14) has a through hole (14a) for ventilation, and a welded area (9b) through which the lead (9) and the plate member (14) are joined, is prevented from extending to the through hole (14a) and extending to an end of at least one of the sheets (9) in a direction perpendicular to a stacking direction in which the sheets are stacked.

7. The sealed battery according to any one of claims 1-6, wherein the plate member (14) is arranged between the lead (9) and the lid (18), and a space is formed between the lid (18) and an outer periphery of the plate member (14) .

8. A method for producing a sealed battery having an electric power generating body including a positive electrode, a negative electrode and a separator, an electrolyte receiving therein the electric power generating body, a container (7) including a bottom to contain therein the electric power generating body and the electrolyte, a current collector (4) arranged to face to an end of the electric power generating body and electrically connected to a lead piece (2) extending from one of the positive electrode and the negative electrode, a lid (18) fixed to an opening of the container to operate as an terminal for the one of the positive electrode and the negative electrode, a plate member (14) of electrical conductivity attached to a surface of the lid facing to the electric power generating body, and a lead (9) electrically connecting the current collector (4) and the plate member (14) to each other, wherein the lead (9) includes a stack of sheets, a thickness of the stack is not more than a thickness of the plate member (14), and the lead (9) and the plate member (14) are joined with a welding, comprising the steps of:
performing an ultrasonic bonding to form a first joined area (9a) at which the sheets (9) of the stack are fixed to each other so that the lead (9) is formed, and
irradiating the first joined area (9a) with a laser to form a second joined area (9b) on the first joined area (9a) so that the lead (9) and the plate member (14) are joined at the second joined area (9b) to be electrically connected to each other.
